# EUROPEAN PATENT SPECIFICATION

(11) **EP 2 521 401 B1**
(45) Date of publication and mention of the grant of the patent: **04.12.2013**
(21) Application number: 10840589.5
(22) Date of filing: 30.12.2010
(51) Int. Cl.: H04W 48/18

(54) **METHOD AND APPARATUS FOR SHARING RADIO NETWORK**
VERFAHREN UND VORRICHTUNG ZUR GEMEINSAMEN NUTZUNG VON FUNKNETZEN
PROCÉDÉ ET APPAREIL DE PARTAGE DE RÉSEAU RADIOPHONIQUE

(30) Priority: 30.12.2009 CN 200910258937
(43) Date of publication of application: 07.11.2012
(60) Divisional application: 13189471.9
(73) Proprietor: Huawei Technologies Co., Ltd., Shenzhen, Guangdong 518129 (CN)
(72) Inventor: CHEN, Yinghao, District, Shenzhen Guangdong Province 518129 (CN); JIANG, Bei, District, Shenzhen Guangdong Province 518129 (CN)
(74) Representative: Gleiter, Hermann
(86) International application number: PCT/CN2010/080491
(87) International publication number: WO 2011/079802

(56) References cited:
- EP-A1- 1 991 014
- EP-A2- 1 280 365
- WO-A1-2011/072755
- CN-A- 1 744 761
- CN-A- 1 863 402
- CN-A- 101 778 372
- US-A1- 2002 128 028
- "Universal Mobile Telecommunications System (UMTS); Network sharing; Architecture and functional description (3GPP TS 23.251 version 6.5.0 Release 6); ETSI TS 123 251", IEEE, LIS, SOPHIA ANTIPOLIS CEDEX, FRANCE, vol. 3-SA2, no. V6.5.0, 1 September 2005 (2005-09-01), XP014032475, ISSN: 0000-0001

## Description

### FIELD OF THE INVENTION

The present invention relates to a communications technology field, and in particular, to a radio network sharing method and apparatus.

### BACKGROUND OF THE INVENTION

As competitive pressure in a communications market increases, how to reduce capital expenditure (Capital Expenditure, CAPEX for short) and operating expense (Operating Expense, OPEX for short) becomes a key concern considered by an operator during network construction. As seen from different stages of the network construction of a radio network, at an initial stage of the network construction, the number of subscribers is small, and a payback period of an investment of network construction is long; at a later stage of the network construction, as a new technology emerges, upgrade and replacement of devices lead to redundancy and waste of original device resources. If resource sharing is implemented through cooperation, mobile operators may overcome their disadvantages by obtaining others' advantages, and implement maximized capital utilization.

Because part that occupies a largest proportion of network resources is radio access network resources, if sharing is implemented between radio access networks, investments of operators may be saved. In the prior art, different operators share physical devices such as a base station controller (Base Station Controller, BSC for short)/base transceiver station (Base Transceiver Station, BTS for short) on the basis that their respective cells are mutually independent, and radio network sharing is implemented based on a cell identity (ID).

In the prior art, network sharing is implemented based on the cell ID, but the operators still use their respective different cells. Therefore, channel resources and frequency resources between the operators cannot be shared, thereby wasting network device resources.

Document EP1991014 A1 describes a method to attach a mobile station to a second generation packet network shared between different operators. In order to attach the mobile station, said mobile station transmits a request to the radio access network (RAN) to have a packet data channel (PDCH) assigned, the RAN assigns to the MS a PDCH and resources for transmitting an uplink, and the MS provides a temporary identity information element, being the mobile station not yet registered to the serving network. The mobile station transmits to the core network (CN) a request message to be attached to the packet service containing the TLLI assembled at the previous step, and the RAN intercepts the attached request message in routes it towards that CN node whose PLMN ID corresponds to the one read from the random TLLI included in the intercepted message. The target CN node then receives the attach request message and decodes the TLLI as being completely random, thus it requests the MS to provide a valid identity.

Document WO 2011/072755 A1 discloses a method of handling a service request in a communication system comprising a radio access network providing radio access capability to a plurality of core networks, the method comprising: a BSC in the radio access network receiving a service request from a mobile terminal; the BSG making a first core network selection; the BSC sending the service request received to a first MSC; the MSC communicating with the mobile terminal in handling the service request; the MSC sending an IMSI of the mobile terminal to the BSC; in the event that the core network selected as a result of the first core network selection does not provide service, the radio access network making a second core network selection; and the BSC sending the service request and the IMSI to the core network selected as a result of the second core network selection.

### SUMMARY OF THE INVENTION

Embodiments of the present invention provide a radio network sharing method and apparatus, which enable different operators to share cells on the basis that existing network device resources are not changed.

In one aspect, an embodiment of the present invention provides a radio network sharing method, including:
obtaining a subscriber identity carried by a mobile terminal;
according to the subscriber identity and a preset mapping relationship between the subscriber identity and an operator, determining an operator corresponding to the mobile terminal;
routing service signaling of the mobile terminal to a core network of the operator corresponding to the mobile terminal; and wherein the mapping relationship between the subscriber identity and the operator is a mapping relationship between a subscriber identity of a mobile terminal and an operator to which the mobile terminal belongs, or a mapping relationship between a subscriber identity of a roaming mobile terminal and an visited operator, and
wherein, if the mapping relationship is the mapping relationship between the subscriber identity of the roaming mobile terminal and the visited operator,
the according to the subscriber identity and a preset mapping relationship between the subscriber identity and an operator, determining an operator corresponding to the mobile terminal comprises:
   according to the subscriber identity, determining a category of roaming subscriber, wherein the category indicates a proportion relationship between shared core networks of different operators to which this category of subscriber is routed; and
   according to a mapping relationship between a subscriber identity of this category of subscriber and an operator, determining an operator corresponding to the roaming subscriber.

In another aspect, an embodiment of the present invention provides a radio network sharing apparatus, including:
an obtaining module, configured to obtain a subscriber identity carried by a mobile terminal;
a determining module, configured to, according to the subscriber identity and a preset mapping relationship between the subscriber identity and an operator, determine an operator corresponding to the mobile terminal;
a routing module, configured to route service signaling of the mobile terminal to a core network of the operator corresponding to the mobile terminal; and
wherein the determining module comprise:
   a category determining unit, configured to determine, according to the subscriber identity, a category of roaming subscriber, wherein the category indicates a proportion relationship between shared core networks of different operators to which this category of subscriber is routed; and
   an operator determining unit, configured to determine, according to a mapping relationship between a subscriber identity of this category of subscriber and an operator, an operator corresponding to the roaming subscriber.

In the foregoing radio network sharing method and apparatus provided in the embodiments of the present invention, the subscriber identity carried by the mobile terminal is obtained, according to the subscriber identity and the preset mapping relationship between the subscriber identity and the operator, the operator corresponding to the mobile terminal is determined, and the service signaling of the mobile terminal is routed to the core network of the operator corresponding to the mobile terminal. In a case that different operators share cells, frequency resources and channel resources of different operators may be shared, and different operators are enabled to share cells on the basis that the existing network device resources are not changed, thereby saving network device resources. In addition, radio spectrum resources and power resources are shared between different core networks, and a bigger frequency hopping gain and a larger power sharing resource pool may be further obtained, thereby improving radio network performance.

### BRIEF DESCRIPTION OF THE DRAWINGS

To illustrate the technical solutions in the embodiments of the present invention or the prior art more clearly, accompanying drawings required for describing the embodiments or the prior art are briefly introduced below. Obviously, the accompanying drawings in the following description are merely some embodiments of the present invention. Those of ordinary skill in the art may further obtain other drawings according to these accompanying drawings without making creative efforts.
FIG. 1 is a schematic flowchart of a radio network sharing method according to an embodiment of the present invention;
FIG 2 is a schematic flowchart of a radio network sharing method according to another embodiment of the present invention;
FIG. 3 is a schematic flowchart of a radio network sharing method according to another embodiment of the present invention;
FIG 4 is a schematic structural diagram of a radio network sharing apparatus according to an embodiment of the present invention;
FIG. 5 is a schematic structural diagram of a radio network sharing apparatus according to another embodiment of the present invention; and
FIG. 6 is a schematic structural diagram of a radio network sharing system that applies to an embodiment of the present invention.

### DETAILED DESCRIPTION OF THE EMBODIMENTS

The technical solutions in the embodiments of the present invention are described clearly and completely below with reference to the accompanying drawings in the embodiments of the present invention. Evidently, the embodiments to be described are merely part of rather than all of the embodiments of the present invention. All other embodiments obtained by those of ordinary skill in the art without making creative efforts based on the embodiments of the present invention shall fall within the protection scope of the present invention.

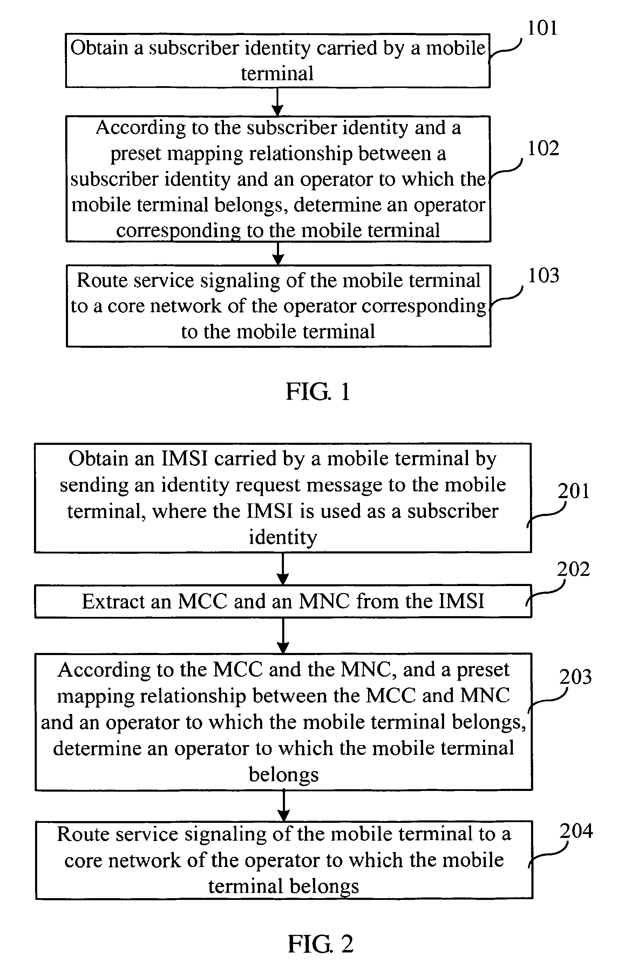

FIG 1 is a schematic flowchart of a radio network sharing method according to an embodiment of the present invention. As shown in FIG. 1, this embodiment includes the following steps:
Step 101: Obtain a subscriber identity carried by a mobile terminal.
Step 102: According to the subscriber identity and a preset mapping relationship between a subscriber identity and an operator to which the mobile terminal belongs, determine an operator corresponding to the mobile terminal.
Step 103: Route service signaling of the mobile terminal to a core network of the operator corresponding to the mobile terminal.

In this embodiment of the present invention, the service signaling may specifically be service signaling, such as location update, a short message, a call, and a paging response, initiated by the mobile terminal. The mapping relationship may include a mapping relationship between the subscriber identity of the mobile terminal and the operator to which the mobile terminal belongs, or a mapping relationship between a subscriber identity of a roaming mobile terminal and a visited operator.

In the radio network sharing method provided in the embodiment of the present invention, the subscriber identity carried by the mobile terminal is obtained, according to the subscriber identity and the preset mapping relationship between the subscriber identity and an operator, the operator corresponding to the mobile terminal is determined, and the service signaling of the mobile terminal is routed to the core network of the operator corresponding to the mobile terminal. In a case that different operators share cells, frequency resources and channel resources of different operators may be shared, and different operators are enabled to share cells on the basis that existing network device resources are not changed, thereby saving network device resources. In addition, radio spectrum resources and power resources are shared between different core networks, and a bigger frequency hopping gain and a larger power sharing resource pool may be further obtained, thereby improving radio network performance.

FIG. 2 is a schematic flowchart of a radio network sharing method according to another embodiment of the present invention. In this embodiment of the present invention, that the subscriber identity shown in FIG 1 is specifically an international mobile subscriber identity (International Mobile Subscriber Identity, IMSI for short) is used for exemplary description. As shown in FIG. 2, this embodiment includes the following steps:
Step 201: Obtain an IMSI carried by a mobile terminal by sending an identity request message to the mobile terminal, where the IMSI is used as a subscriber identity.

When the mobile terminal initially enters a coverage range of a base station subsystem (Base Station Subsystem, BSS for short) and initiates location update, if an MS does not carry the IMSI, the BSS constructs an identity request (Identity Request) message and sends the identity request message to the mobile terminal; the BSS obtains the IMSI carried by the mobile terminal by sending the identity request message to the mobile terminal, and then determines, according to the IMSI, a core network to which the mobile terminal belongs.
Step 202: Extract an MCC and an MNC from the IMSI.

The IMSI is used as the subscriber identity. Because the IMSI includes a mobile country code (Mobile Country Code, MCC for short) and a mobile network code (Mobile Network Code, MNC for short), according to the third generation partnership project (3GPP) protocol, the MCC and the MNC may uniquely correspond to a certain operator. Therefore, the BSS may determine, according to the IMSI, the core network to which the mobile terminal belongs.
Step 203: According to the MCC and the MNC, and a preset mapping relationship between the MCC and MNC and an operator to which the mobile terminal belongs, determine an operator to which the mobile terminal belongs.

The BSS may preset the mapping relationship between the MCC and MNC and a home operator. Certainly, the mapping relationship between the MCC and MNC and the home operator may also be set by another network element in a radio network.
Step 204: Route service signaling of the mobile terminal to a core network of the operator to which the mobile terminal belongs.

Because the subscriber identity is the IMSI, the service signaling of the mobile terminal is routed, according to the mapping relationship between the MCC and MNC that are in the IMSI and the operator, to the core network corresponding to the mobile terminal.

In the radio network sharing method provided in the embodiment of the present invention, the MCC and the MNC are extracted from the IMSI carried by the mobile terminal, and according to the MCC and the MNC, and a mapping relationship between the mobile terminal and an operator, the service signaling of the mobile terminal is routed to the core network of the operator corresponding to the mobile terminal. In a case that different operators share cells, frequency resources and channel resources of different operators may be shared, and different operators are enabled to share cells on the basis that existing network device resources are not changed, thereby saving network device resources. In addition, radio spectrum resources and power resources are shared between different core networks, and a bigger frequency hopping gain and a larger power sharing resource pool may be further obtained, thereby improving radio network performance.

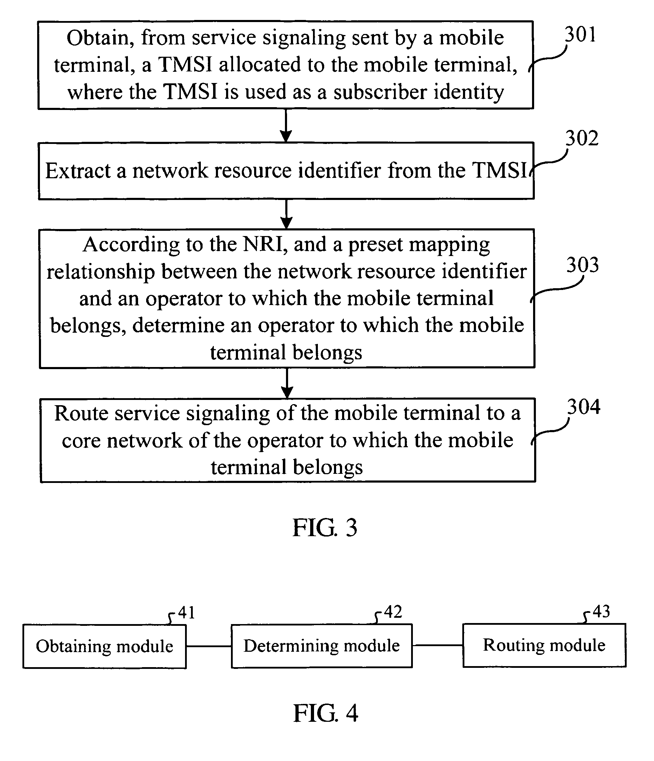

FIG. 3 is a schematic flowchart of a radio network sharing method according to another embodiment of the present invention. In this embodiment of the present invention, that the subscriber identity shown in FIG. 1 is specifically a temporary mobile subscriber identity (Temporary Mobile Subscriber Identity, TMSI for short) is used for exemplary description. As shown in FIG. 3, this embodiment includes the following steps:
Step 301: Obtain, from service signaling sent by a mobile terminal, a TMSI allocated to the mobile terminal, where the TMSI is used as a subscriber identity.

When the mobile terminal succeeds in location update in a coverage area of a BSS, a core network reallocates a TMSI to the mobile terminal. Therefore, for subsequent service signaling of the mobile terminal, such as a call and a short message, if the TMSI is carried, the BSS may judge, according to the TMSI, a core network to which the mobile terminal belongs.
Step 302: Extract a network resource identifier from the TMSI.

The TMSI is used as the subscriber identity of the mobile terminal. Because the TMSI includes a network resource identifier (Network Resource Identifier, NRI for short), the BSS may judge, according to the NRI, which core network to which the mobile terminal belongs. Because one core network only belongs to one operator, the BSS may make the mobile terminal correspond to the core network to which the mobile terminal belongs.
Step 303: According to the NRI, and a preset mapping relationship between the network resource identifier and an operator to which the mobile terminal belongs, determine an operator to which the mobile terminal belongs.

A BSC in the BSS may preset a mapping relationship between the NIR and an operator. Certainly, the mapping relationship between the NIR and the operator may also be set by another network element in a radio network.
Step 304: Route service signaling of the mobile terminal to a core network of the operator to which the mobile terminal belongs.

The TMSI is used as the subscriber identity. Therefore, the service signaling of the mobile terminal is routed, according to the mapping relationship between the NRI in the TMSI and the operator, to the core network to which the mobile terminal belongs.

In the radio network sharing method provided in the embodiment of the present invention, the NRI is extracted from the TMSI carried by the mobile terminal, and according to the NRI and a mapping relationship between the mobile terminal and an operator, the service signaling of the mobile terminal is routed to the core network of the operator corresponding to the mobile terminal. In a case that different operators share cells, frequency resources and channel resources of different operators may be shared, and different operators are enabled to share cells on the basis that existing network device resources are not changed, thereby saving network device resources. In addition, radio spectrum resources and power resources are shared between different core networks, and a bigger frequency hopping gain and a larger power sharing resource pool may be further obtained, thereby improving radio network performance.

Further, on the basis of the foregoing embodiments shown in FIG. 1 to FIG. 3, if the service signaling of the mobile terminal cannot be routed, according to the subscriber identity, to the core network to which the mobile terminal belongs, the service signaling of the mobile terminal is routed to a corresponding core network according to a set rule. For example, for a service that does not carry an IMSI or a TMSI, or when carried IMSI or TMSI information does not correspond to the core network to which the mobile terminal belongs, for example, an emergency call when no subscriber identity module (Subscriber Identity Module, SIM for short) card exists, the BSS may route, according to the set rule (for example, at random or in sequence), the service signaling of the mobile terminal to a core network of a certain operator. If the service signaling is rejected by the core network, the BSS reroutes the service signaling to a core network of another operator, and stops rerouting until the service signaling is accepted by a certain core network, or is rejected by all core networks.

Further, on the basis of the foregoing embodiments shown in the FIG. 1 to FIG. 3, the BSS may further set a mapping relationship between a subscriber identity and an operator.

In the embodiments shown in FIG. 2 and FIG 3, the technical solutions of network sharing are described by taking that the mapping relationship between a subscriber identity of a mobile terminal and an operator to which the mobile terminal belongs is preset as an example. Certainly, a mapping relationship between a subscriber identity of a roaming mobile terminal and a visited operator may also be preset to route the roaming mobile terminal to a corresponding core network of the visited operator. A specific process is basically similar to specific processes in the embodiments shown in FIG. 2 and FIG. 3, a difference lies in different mapping relationships, and the specific process is not repeatedly described here.

Further, when the mapping relationship is specifically the mapping relationship between the subscriber identity of the roaming mobile terminal and the visited operator, after the BSS obtains the subscriber identity carried by the roaming mobile terminal, a category of roaming subscriber is determined according to the subscriber identity, where the category may indicate a proportion relationship between shared core networks of different operators to which this category of subscriber is routed. For example, when a mobile terminal roams, a visited BSS is shared by two operators, operator A and operator B. The visited BSS may set a proportion relationship for roaming subscribers of category X as follows: Service signaling of 80% of the roaming subscribers is routed to a core network of operator A, and service signaling of 20% of the roaming subscribers is routed to a core network of operator B; and set a proportion relationship for roaming subscribers of category Y as follows: Service signaling of 30% of the roaming subscriber is routed to the core network of operator A, and service signaling of 70% of the roaming subscriber is routed to the core network of operator B. In addition, corresponding proportion relationships of category X and category Y may further be configured according to a combination of MCC + MNC. For example: roaming subscribers whose MCC + MNC = 460 + 00 belong to category X; roaming subscribers whose MCC + MNC = 460 + 01 belong to category Y. After the proportion relationships are determined, service signaling of a roaming mobile terminal may be routed to a core network of an operator corresponding to the mobile terminal.

Further, to ensure that a specific roaming subscriber is not distributed at random to core networks of different operators during accessing of multiple times, the visited BSS may further segment IMSIs of roaming subscribers, and set, according to a set proportion relationship corresponding to a category, operators corresponding to different IMSI segments. For example, when a mobile terminal roams, because the BSS has set the proportion relationship for the roaming subscribers of category X as follows: The service signaling of 80% of the roaming subscribers is routed to the core network of operator A, and the service signaling of 20% of the roaming subscribers is routed to the core network of operator B, last two digits of the IMSI may be obtained, service signaling of roaming subscribers whose last two digits fall in a range from 0 to 79 is routed to the core network of operator A, and service signaling of roaming subscribers whose last two digits fall in a range from 80 to 99 is routed to the core network of operator B. Or, an IMSI V value (IMSI V value = (IMSI div 10) mod 1000) may be further obtained according to the 3GPP protocol. Specifically, service signaling of roaming subscribers whose IMSI V value falls in a range from 0 to 799 is routed to the core network of operator A, and service signaling of roaming subscribers whose IMSI V value falls in a range from 800 to 999 is routed to the core network of operator B. By segmenting the IMSIs, it is also implemented: that 80% of service signaling is routed to the core network of operator A, and 20% of service signaling is routed to the core network of operator B. In this embodiment of the present invention, an example that two core networks are deployed in the visited place and two IMSI segments are obtained through dividing is only taken for exemplary description, and cannot be construed as a limitation on the present invention. Both the proportion relationship and the segment range may be set according to an actual visited network deployment situation.

In the foregoing embodiment, by setting proportion relationships corresponding to different categories for mobile terminals, a problem of proportion distribution of mobile terminals during roaming in radio network sharing is solved, so that a shared visited BSS may flexibly route service signaling of roaming mobile terminals to core networks of corresponding operators according to the actual network deployment situation.

FIG. 4 is a schematic structural diagram of a radio network sharing apparatus according to an embodiment of the present invention. This embodiment of the present invention may be used to implement method processes of the foregoing embodiments shown in FIG. 1 to FIG. 3. A specific implementation process is not repeatedly described here. As shown in FIG. 4, this embodiment includes: an obtaining module 41, a determining module 42, and a routing module 43.

The obtaining module 41 is configured to obtain a subscriber identity carried by a mobile terminal; the determining module 42 is configured to, according to the subscriber identity obtained by the obtaining module 41 and a preset mapping relationship between the subscriber identity and an operator, determine an operator corresponding to the mobile terminal; and the routing module 43 is configured to route service signaling of the mobile terminal to a core network of the operator which corresponds to the mobile terminal and is determined by the determining module 42.

In the radio network sharing apparatus provided in the embodiment of the present invention, the obtaining module 41 obtains the subscriber identity carried by the mobile terminal, and the determining module 42 determines, according to the subscriber identity and a preset mapping relationship between a subscriber identity and an operator, the operator corresponding to the mobile terminal, so that the routing module 43 can route the service signaling of the mobile terminal to the core network of the operator corresponding to the mobile terminal. In a case that different operators share cells, frequency resources and channel resources of different operators may be shared, and different operators are enabled to share cells on the basis that existing network device resources are not changed, thereby saving network device resources.

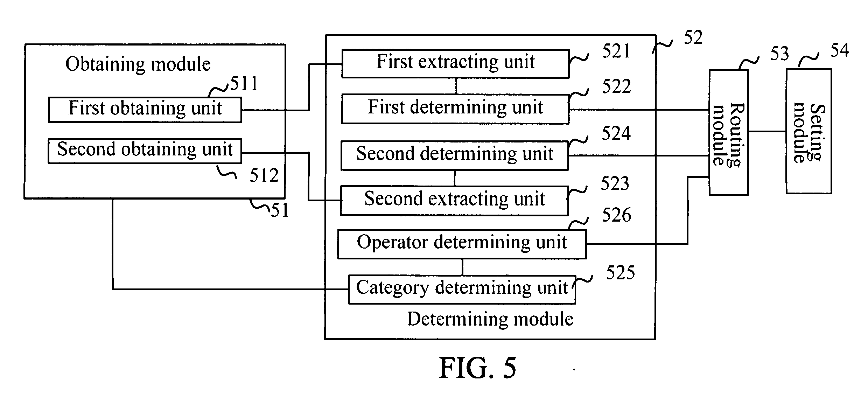

FIG. 5 is a schematic structural diagram of a radio network sharing apparatus according to another embodiment of the present invention. This embodiment of the present invention may be used to implement method processes of the foregoing embodiments shown in FIG. 1 to FIG. 3. A specific implementation process is not repeatedly described here. As shown in FIG. 5, this embodiment includes: an obtaining module 51, a determining module 52, a routing module 53, and a setting module 54.

The obtaining module 51 is configured to obtain a subscriber identity carried by a mobile terminal; the determining module 52 is configured to, according to the subscriber identity obtained by the obtaining module 51 and a preset mapping relationship between the subscriber identity and an operator, determine an operator corresponding to the mobile terminal; and the routing module 53 is configured to route service signaling of the mobile terminal to a core network of the operator which corresponds to the mobile terminal and is determined by the determining module 52; the setting module 54 is configured to set the mapping relationship between the subscriber identity and the operator, where the mapping relationship may specifically be a mapping relationship between a subscriber identity of a mobile terminal and an operator to which the mobile terminal belongs, and may also be a mapping relationship between a subscriber identity of a roaming mobile terminal and an visited operator.

Further, the obtaining module 51 may further include: a first obtaining unit 511; the determining module 52 includes: a first extracting unit 521 and a first determining unit 522; where, the first obtaining unit 511 is configured to obtain an international mobile subscriber identity carried by a mobile terminal by sending an identity request message to the mobile terminal, where the international mobile subscriber identity is used as the subscriber identity; the first extracting unit 521 is configured to extract a mobile country code and a mobile network code from the international mobile subscriber identity; and the first determining unit 522 is configured to determine, according to the mobile country code and the mobile network code, and a preset mapping relationship between the mobile country code and mobile network code and an operator, the operator corresponding to the mobile terminal.

The first obtaining unit 511 extracts the MCC and the MNC from the IMSI carried by the mobile terminal, and the first determining unit 522 determines, according to the MCC and the MNC, and the preset mapping relationship between the MCC and MNC and the operator, the operator corresponding to the mobile terminal, so that the routing module 53 can route, according to the mapping relationship, the service signaling of the mobile terminal to the core network of the operator corresponding to the mobile terminal.

Further, the obtaining module 51 may further include: a second obtaining unit 512; the determining module 52 may further include: a second extracting unit 523 and a second determining unit 524; where, the second obtaining unit 512 is configured to obtain, from service signaling sent by the mobile terminal, a temporary mobile subscriber identity allocated to the mobile terminal, where the temporary mobile subscriber identity is used as the subscriber identity; the second extracting unit 523 is configured to extract a network resource identifier from the temporary mobile subscriber identity; and the second determining unit 524 is configured to determine, according to the network resource identifier and a preset mapping relationship between the network resource identifier and an operator, the operator corresponding to the mobile terminal.

The second obtaining unit 512 obtains, from the service signaling sent by the mobile terminal, the temporary mobile subscriber identity allocated to the mobile terminal, and the second determining unit 524 determines, according to the network resource identifier and the preset mapping relationship between the network resource identifier and the operator, the operator corresponding to the mobile terminal, so that the routing module 53 can route, according to the mapping relationship, the service signaling of the mobile terminal to the core network of the operator corresponding to the mobile terminal.

Further, the determining module 52 includes: a category determining unit 525 and an operator determining unit 526; where, the category determining unit 525 is configured to determine, according to the subscriber identity, a category of roaming subscriber, where the category indicates a proportion relationship between shared core networks of different operators to which this category of subscriber is routed; and the operator determining unit 526 is configured to determine, according to a mapping relationship between a subscriber identity of this category of subscriber and an operator, an operator corresponding to the roaming subscriber.

In addition, if the service signaling of the mobile terminal cannot be routed, according to the subscriber identity, to a core network to which the mobile terminal belongs, the routing module 52 may route the service signaling of the mobile terminal to a corresponding core network according to a set rule, for example, for an emergency call when no subscriber identity module (Subscriber Identity Module, SIM for short) card exists. In this case, the routing module 52 cannot route, according to the subscriber identity, the service signaling of the mobile terminal to the core network to which the mobile terminal belongs. The routing module 52 may route the service signaling of the mobile terminal to a core network of a certain operator according to the set rule (for example, at random or in sequence). If the service signaling is rejected by the core network, the service signaling is rerouted to a core network of another operator, and rerouting is stopped until the service signaling is accepted by a certain core network, or is rejected by all core networks.

Further, the first obtaining unit 511 and the second obtaining unit 512 that are in the obtaining module 51 may be implemented by one unit module, the first extracting unit 521 and the second extracting unit 522 that are in the determining module 52 may be implemented by one unit module, and the first determining unit 522 and the second determining unit 524 that are in the determining module 52 may also be implemented by one unit module; in the embodiment of the present invention, each structure that implements different functions is divided into different modules or units merely for ease of description. In actual applications, in order to save hardware costs, the technical solutions that are described in the embodiments of the present invention and implemented by adopting different hardware devices are all the technical solutions described in the embodiments of the present invention.

In the radio network sharing apparatus provided in the embodiment of the present invention, the obtaining module 51 obtains the subscriber identity carried by the mobile terminal, and the determining module 52 determines, according to the subscriber identity and the preset mapping relationship between the subscriber identity and the operator, the operator corresponding to the mobile terminal, so that the routing module 53 can route the service signaling of the mobile terminal to the core network of the operator corresponding to the mobile terminal. In a case that different operators share cells, frequency resources and channel resources of different operators may be shared, and different operators are enabled to share cells on the basis that existing network device resources are not changed, thereby saving network device resources; In addition, radio spectrum resources and power resources are shared between different core networks, and a bigger frequency hopping gain and a larger power sharing resource pool may be further obtained, thereby improving radio network performance.

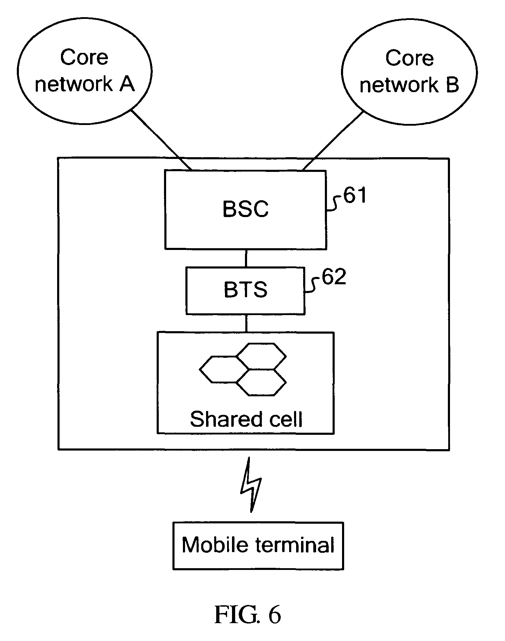

FIG. 6 is a schematic structural diagram of a radio network sharing system that applies to an embodiment of the present invention. As shown in FIG. 6, the embodiment includes: a BSC61 and a BTS62. The BSC61 in this embodiment may specifically be the radio network sharing apparatus in the embodiment shown in FIG. 4 or FIG. 5. The embodiment of the present invention may be used to implement method processes of the foregoing embodiments shown in FIG. 1 to FIG. 3. A specific process is not repeatedly described here.

A mobile terminal sends service signaling through a shared cell to the BTS62, and a subscriber identity of the mobile terminal is reported to the BTS62; the BTS62 forwards the service signaling to the BSC61; the BSC61 obtains the subscriber identity of the mobile terminal, determines, according to the subscriber identity and a preset mapping relationship between the subscriber identity and an operator, an operator corresponding to the mobile terminal, and routes the service signaling of the mobile terminal to a core network of the operator corresponding to the mobile terminal.

Further, the BSC61 and the BTS62 form a shared BSS.

In the foregoing embodiment of the present invention, that two core networks share one multi-carrier module is taken as an example, where capacity of the multi-carrier module is 6 transceivers (Transceiver, TRX for short). By adopting a cell-based network sharing manner in the prior art and by adopting a co-cell network sharing manner provided in the embodiments of the present invention to share, traffic volume that one multi-carrier module may bear is as shown in Table 1.

**Table 1**

| | Cell Form | Total borne traffic volume (calculated according to 2% call loss) | | | |
|---|---|---|---|---|---|
| Prior Art | Two cells; capacity of each cell: three TRXs | 28.08 erlang (Erlang, Erl for short) | | | |
| Embodiments of the Present Invention | One cell; capacity: six TRXs | 33.76 Erl | | | |

It may be known from the foregoing table 1 that, by adopting the radio network sharing method, apparatus, and system in the embodiments of the present invention, because different core networks share TRX resources in cells, system capacity is improved by (33.76 - 28.08)/28.08 = 20%, thereby improving the system capacity.

In the foregoing embodiments, only a global system for mobile communications (Global System for Mobile Communications, GSM system for short) is taken as an example for description. The embodiments of the present invention may also be applied in other communications network systems, for example, may also be applied in a wideband-code division multiple access (Wideband-Code Division Multiple Access, WCDMA for short) network, a long term evolution (Long Term Evolution, LTE for short) communications system, and so on.

Through the foregoing description of the embodiments, those skilled in the art may clearly understand that the present invention may be implemented through software in combination with a necessary hardware platform, and certainly, may also be implemented through hardware. However in most cases, the former is a preferred implementation manner. Based on such understanding, all or part of the technical solutions in the present invention that make contributions to the background technology may be embodied in the form of a software product. This computer software product may be stored in a storage medium, such as a ROM/RAM, a magnetic disk, and a compact disk, and includes several instructions used for enabling a computer device (which may be a personal computer, a server, or a network device, and so on) to execute the methods provided in each of the embodiments of the present invention or in some parts of the embodiments.

Finally, it should be noted that, the foregoing embodiments are merely intended to describe the technical solutions in the present invention instead of limiting the technical solutions in the present invention. Although the present invention is described in detail with reference to the foregoing embodiments, those of ordinary skill in the art should understand that, they may still make modifications to the technical solutions recorded in the foregoing embodiments, or equivalent replacements to part of the technical features; however, these modifications or replacements do not make the essence of corresponding technical solutions depart from the scope of the technical solutions in the embodiments of the present invention.

## Claims

1. A radio network sharing method, comprising:
obtaining (101) a subscriber identity carried by a mobile terminal;
according to the subscriber identity and a preset mapping relationship between the subscriber identity and an operator, determining (102) an operator corresponding to the mobile terminal;
routing (103) service signaling of the mobile terminal to a core network of the operator corresponding to the mobile terminal,
wherein the mapping relationship between the subscriber identity and the operator is a mapping relationship between a subscriber identity of a mobile terminal and an operator to which the mobile terminal belongs, or a mapping relationship between a subscriber identity of a roaming mobile terminal and an visited operator, **characterized in that**
if the mapping relationship is the mapping relationship between the subscriber identity of the roaming mobile terminal and the visited operator,
the according to the subscriber identity and a preset mapping relationship between the subscriber identity and an operator, determining an operator corresponding to the mobile terminal comprises:
according to the subscriber identity, determining a category of roaming subscriber, wherein the category indicates a proportion relationship between shared core networks of different operators to which this category of subscriber is routed; and
according to a mapping relationship between a subscriber identity of this category of subscriber and an operator, determining an operator corresponding to the roaming subscriber.

2. The method according to claim 1, wherein the obtaining a subscriber identity carried by a mobile terminal comprises:
obtaining an international mobile subscriber identity carried by a mobile terminal by sending an identity request message to the mobile terminal, wherein the international mobile subscriber identity is used as the subscriber identity.

3. The method according to claim 2, wherein the according to the subscriber identity and a preset mapping relationship between the subscriber identity and an operator, determining an operator corresponding to the mobile terminal comprises:
extracting a mobile country code and a mobile network code from the international mobile subscriber identity; and
according to the mobile country code and the mobile network code, and a preset mapping relationship between the mobile country code and mobile network code and an operator, determining the operator corresponding to the mobile terminal.

4. The method according to claim 1, wherein the obtaining a subscriber identity carried by a mobile terminal comprises:
obtaining, from service signaling sent by a mobile terminal, a temporary mobile subscriber identity allocated to the mobile terminal, wherein the temporary mobile subscriber identity is used as the subscriber identity.

5. The method according to claim 4, wherein the according to the subscriber identity and a preset mapping relationship between the subscriber identity and an operator, determining an operator corresponding to the mobile terminal comprises:
extracting a network resource identifier from the temporary mobile subscriber identity; and
according to the network resource identifier and a preset mapping relationship between the network resource identifier and an operator, determining the operator corresponding to the mobile terminal.

6. The method according to any one of claims 1 to 5, further comprising:
setting the mapping relationship between the subscriber identity and the operator.

7. A radio network sharing apparatus, comprising:
an obtaining module (41), configured to obtain a subscriber identity carried by a mobile terminal;
a determining module (42), configured to, according to the subscriber identity obtained by the obtaining module and a preset mapping relationship between the subscriber identity and an operator, determine an operator corresponding to the mobile terminal; and
a routing module (43), configured to route service signaling of the mobile terminal to a core network of the operator which corresponds to the mobile terminal and is determined by the determining module; **characterized in that**
the determining module (42, 52) comprises:
a category determining unit (525), configured to determine, according to the subscriber identity, a category of roaming subscriber, wherein the category indicates a proportion relationship between shared core networks of different operators to which this category of subscriber is routed; and
an operator determining unit (526), configured to determine, according to a mapping relationship between a subscriber identity of this category of subscriber and an operator, an operator corresponding to the roaming subscriber.

8. The apparatus according to claim 7, wherein:
the obtaining module (41, 51) comprises: a first obtaining unit (511); wherein,
the first obtaining unit (511) is configured to obtain an international mobile subscriber identity carried by a mobile terminal by sending an identity request message to the mobile terminal, wherein the international mobile subscriber identity is used as the subscriber identity; and
the determining module (42, 52) comprises: a first extracting unit (521) and a first determining unit (522); wherein,
the first extracting unit (521) is configured to extract a mobile country code and a mobile network code from the international mobile subscriber identity; and
the first determining unit (522) is configured to determine, according to the mobile country code and the mobile network code, and a preset mapping relationship between the mobile country code and mobile network code and an operator, the operator corresponding to the mobile terminal.

9. The apparatus according to claim 7, wherein:
the obtaining module (41,51) comprises: a second obtaining unit (512); wherein,
the second obtaining unit (512) is configured to obtain, from service signaling sent by a mobile terminal, a temporary mobile subscriber identity allocated to the mobile terminal, wherein the temporary mobile subscriber identity is used as the subscriber identity; and
the determining module (42, 52) comprises: a second extracting unit (523) and a second determining unit (524); wherein,
the second extracting unit (523) is configured to extract a network resource identifier from the temporary mobile subscriber identity; and
the second determining unit (524) is configured to determine, according to the network resource identifier and a preset mapping relationship between the network resource identifier and an operator, the operator corresponding to the mobile terminal.

10. The apparatus according to any one of claims 7 to 9, further comprising:
a setting module (54), configured to set the mapping relationship between the subscriber identity and the operator.

11. The apparatus according to any one of claims 7 to 10, wherein the apparatus is a base station subsystem.

## Patentansprüche

1. Verfahren zur gemeinsamen Nutzung von Funknetzen, das Folgendes umfasst:
Erhalten (101) einer von einem mobilen Endgerät geführten Teilnehmerkennung;
gemäß der Teilnehmerkennung und einer voreingestellten Abbildungsbeziehung zwischen der Teilnehmerkennung und einem Betreiber, Bestimmen (102) eines dem mobilen Endgerät entsprechenden Betreibers;
Lenken (103) einer Dienstsignalisierung des mobilen Endgeräts zu einem Kernnetz des dem mobilen Endgerät entsprechenden Betreibers,
wobei die Abbildungsbeziehung zwischen der Teilnehmerkennung und dem Betreiber eine Abbildungsbeziehung zwischen einer Teilnehmerkennung eines mobilen Endgeräts und eines Betreibers ist, zu dem das mobile Endgerät gehört, oder eine Abbildungsbeziehung zwischen einer Teilnehmerkennung eines wandernden mobilen Endgeräts und eines besuchten Betreibers, **dadurch gekennzeichnet, dass** falls die Abbildungsbeziehung die Abbildungsbeziehung zwischen der Teilnehmerkennung des wandernden mobilen Endgeräts und des besuchten Betreibers ist,
das Bestimmen eines dem mobilen Endgerät entsprechenden Betreibers gemäß der Teilnehmerkennung und einer voreingestellten Abbildungsbeziehung zwischen der Teilnehmerkennung und einem Betreiber Folgendes umfasst:
gemäß der Teilnehmerkennung, Bestimmen einer Kategorie von wanderndem Teilnehmer, wobei die Kategorie eine Proportionsbeziehung zwischen den gemeinsambenutzten Kernnetzen von verschiedenen Betreibern, zu denen diese Kategorie von Teilnehmer gelenkt wird, anzeigt; und
gemäß einer Abbildungsbeziehung zwischen einer Teilnehmerkennung dieser Kategorie von Teilnehmer und einem Betreiber, Bestimmen eines dem wandernden Teilnehmer entsprechenden Betreibers.

2. Verfahren nach Anspruch 1, wobei das Erhalten einer durch ein mobiles Endgerät geführten Teilnehmerkennung Folgendes umfasst:
Erhalten einer durch ein mobiles Endgerät geführten internationalen Mobilteilnehmerkennung durch Senden einer Kennungsanforderungsnachricht an das mobile Endgerät, wobei die internationale Mobilteilnehmerkennung als die Teilnehmerkennung verwendet wird.

3. Verfahren nach Anspruch 2, wobei das Bestimmen eines dem mobilen Endgerät entsprechenden Betreibers gemäß der Teilnehmerkennung und einer voreingestellten Abbildungsbeziehung zwischen der Teilnehmerkennung und einem Betreiber Folgendes umfasst:
Extrahieren einer Mobil-Landeskennzahl und einer Mobilnetzkennzahl aus der internationalen Mobilteilnehmerkennung; und
gemäß der Mobil-Landeskennzahl und der Mobilnetzkennzahl und einer voreingestellten Abbildungsbeziehung zwischen der Mobil-Landeskennzahl und der Mobilnetzkennzahl und eines Betreibers, Bestimmen des Betreibers gemäß dem mobilen Endgerät.

4. Verfahren nach Anspruch 1, wobei das Erhalten einer durch ein mobiles Endgerät geführten Teilnehmerkennung Folgendes umfasst:
Erhalten, aus einer durch ein mobiles Endgerät gesendeten Dienstsignalisierung, einer dem mobilen Endgerät zugewiesenen temporären Mobilteilnehmerkennung, wobei die temporäre Mobilteilnehmerkennung als die Teilnehmerkennung verwendet wird.

5. Verfahren nach Anspruch 4, wobei das Bestimmen eines dem mobilen Endgerät entsprechenden Betreibers gemäß der Teilnehmerkennung und einer voreingestellten Abbildungsbeziehung zwischen der Teilnehmerkennung und einem Betreiber Folgendes umfasst:
Extrahieren einer Netzressourcenkennung aus der temporären Mobilteilnehmerkennung und
gemäß der Netzressourcenkennung und einer voreingestellten Abbildungsbeziehung zwischen der Netzressourcenkennung und einem Betreiber, Bestimmen des dem mobilen Endgerät entsprechenden Betreibers.

6. Verfahren nach einem der Ansprüche 1 bis 5, ferner umfassend:
Einstellen der Abbildungsbeziehung zwischen der Teilnehmerkennung und dem Betreiber.

7. Vorrichtung zur gemeinsamen Nutzung von Funknetzen, die Folgendes umfasst:
ein Erhaltungsmodul (41), konfiguriert zum Erhalten einer durch ein mobiles Endgerät geführten Teilnehmerkennung;
ein Bestimmungsmodul (42), konfiguriert zum Bestsimmen eines dem mobilen Endgerät entsprechenden Betreibers gemäß der durch das Erhaltungsmodul erhaltenen Teilnehmerkennung und einer voreingestellten Abbildungsbeziehung zwischen der Teilnehmerkennung und einem Betreiber; und
ein Lenkungsmodul (43), konfiguriert zum Lenken einer Dienstsignalisierung des mobilen Endgeräts zu einem Kernnetz des Betreibers, der dem mobilen Endgerät entspricht und durch das Bestimmungsmodul bestimmt wird; **dadurch gekennzeichnet, dass**
das Bestimmungsmodul (42, 52) Folgendes umfasst:
eine Kategoriebestimmungseinheit (525), konfiguriert zum Bestimmen einer Kategorie eines wandernden Teilnehmers gemäß der Teilnehmerkennung, wobei die Kategorie eine Proportionsbeziehung zwischen gemeinsam benutzten Kernnetzen von verschiedenen Betreibern anzeigt, zu denen diese Kategorie von Teilnehmer gelenkt wird; und
eine Betreiberbestimmungseinheit (526), konfiguriert zum Bestimmen eines dem wandernden Teilnehmer entsprechenden Betreibers gemäß einer Abbildungsbeziehung zwischen einer Teilnehmerkennung dieser Kategorie von Teilnehmer und einem Betreiber.

8. Vorrichtung nach Anspruch 7, wobei:
das Erhaltungsmodul (41, 51) Folgendes umfasst: eine erste Erhaltungseinheit (511); wobei
die erste Erhaltungseinheit (511) konfiguriert ist zum Erhalten einer durch ein mobiles Endgerät geführten internationalen Mobilteilnehmerkennung durch Senden einer Kennungsanforderungsnachricht an das mobile Endgerät, wobei die internationale Mobilteilnehmerkennung als die Teilnehmerkennung verwendet wird; und
das Bestimmungsmodul (42, 52) Folgendes umfasst: eine erste Extrahiereinheit (521) und eine erste Bestimmungseinheit (522); wobei
die erste Extrahiereinheit (521) konfiguriert ist zum Extrahieren einer Mobil-Landeskennzahl und einer Mobilnetzkennzahl aus der internationalen Mobilteilnehmerkennung; und
die erste Bestimmungseinheit (522) konfiguriert ist zum Bestimmen des dem mobilen Endgerät entsprechenden Betreibers gemäß der Mobil-Landeskennzahl und der Mobilnetzkennzahl und einer voreingestellten Abbildungsbeziehung zwischen der Mobil-Landeskennzahl und der Mobilnetzkennzahl und eines Betreibers.

9. Vorrichtung nach Anspruch 7, wobei:
das Erhaltungsmodul (41, 51) Folgendes umfasst: eine zweite Erhaltungseinheit (512); wobei
die zweite Erhaltungseinheit (512) konfiguriert ist zum Erhalten, aus einer durch ein mobiles Endgerät gesendeten Dienstsignalisierung, einer dem mobilen Endgerät zugewiesenen temporären Mobilteilnehmerkennung, wobei die temporäre Mobilteilnehmerkennung als die Teilnehmerkennung verwendet wird; und
das Bestimmungsmodul (42, 52) Folgendes umfasst: eine zweite Extrahiereinheit (523) und eine zweite Bestimmungseinheit (524); wobei
die zweite Extrahiereinheit (523) konfiguriert ist zum Extrahieren einer Netzressourcenkennung aus der temporären Mobilteilnehmerkennung; und
die zweite Bestimmungseinheit (524) konfiguriert ist zum Bestimmen des dem mobilen Endgerät entsprechenden Betreibers gemäß der Netzressourcenkennung und einer voreingestellten Abbildungsbeziehung zwischen der Netzressourcenkennung und einem Betreiber.

10. Vorrichtung nach einem der Ansprüche 7 bis 9, die weiterhin Folgendes umfasst:
ein Einstellmodul (54), konfiguriert zum Einstellen der Abbildungsbeziehung zwischen der Teilnehmerkennung und dem Betreiber.

11. Vorrichtung nach einem der Ansprüche 7 bis 10, wobei die Vorrichtung ein Basisstationsuntersystem ist.

## Revendications

1. Procédé de partage de réseau radio, comprenant les étapes suivantes :
obtenir (101) une identité d'abonné acheminée par un terminal mobile ;
conformément à l'identité d'abonné et à une relation de mappage prédéfinie entre l'identité d'abonné et un opérateur, déterminer (102) un opérateur correspondant au terminal mobile ;
router (103) une signalisation de service du terminal mobile vers un réseau d'infrastructure de l'opérateur correspondant au terminal mobile,
où la relation de mappage entre l'identité d'abonné et l'opérateur est une relation de mappage entre une identité d'abonné d'un terminal mobile et un opérateur auquel le terminal mobile appartient, ou une relation de mappage entre une identité d'abonné d'un terminal mobile itinérant et un opérateur visité, **caractérisé en ce que** :
si la relation de mappage est une relation de mappage entre l'identité d'abonné du terminal mobile itinérant et l'opérateur visité,
conformément à l'identité d'abonné et à une relation de mappage prédéfinie entre l'identité d'abonné et un opérateur, la détermination d'un opérateur correspondant au terminal mobile, comprend les étapes suivantes :
conformément à l'identité d'abonné, déterminer une catégorie d'abonné itinérant, où la catégorie indique une relation de proportion entre des réseaux d'infrastructure partagés de différents opérateurs vers lesquels cette catégorie d'abonné est routée ; et
conformément à une relation de mappage entre une identité d'abonné de cette catégorie d'abonné et un opérateur, déterminer un opérateur correspondant à l'abonné itinérant.

2. Procédé selon la revendication 1, dans lequel l'obtention d'une identité d'abonné acheminée par un terminal mobile comprend l'étape suivante :
obtenir une identité internationale d'abonné mobile acheminée par un terminal mobile en envoyant un message de demande d'identité au terminal mobile, où l'identité internationale d'abonné mobile est utilisée comme identité d'abonné.

3. Procédé selon la revendication 2, dans lequel conformément à l'identité d'abonné et à une relation de mappage prédéfinie entre l'identité d'abonné et un opérateur, la détermination d'un opérateur correspondant au terminal mobile comprend les étapes suivantes :
extraire un indicatif de pays du mobile et un code de réseau mobile depuis une identité internationale d'abonné mobile ; et
conformément à l'indicatif de pays du mobile et au code de réseau mobile, et à une relation de mappage prédéfinie entre l'indicatif de pays du mobile et le code de réseau mobile et un opérateur, déterminer l'opérateur correspondant au terminal mobile.

4. Procédé selon la revendication 1, dans lequel l'obtention d'une identité d'abonné acheminée par un terminal mobile comprend l'étape suivante :
obtenir à partir d'une signalisation de service envoyée par un terminal mobile, une identité d'abonné mobile temporaire allouée au terminal mobile, où l'identité d'abonné mobile temporaire est utilisée comme l'identité d'abonné.

5. Procédé selon la revendication 4, dans lequel conformément à l'identité d'abonné et à une relation de mappage prédéfinie entre l'identité d'abonné et un opérateur, la détermination d'un opérateur correspondant au terminal mobile, comprend les étapes suivantes :
extraire un identificateur de ressource de réseau à partir de l'identité d'abonné mobile temporaire ; et
conformément à l'identificateur de ressource de réseau et à une relation de mappage prédéfinie entre l'identificateur de ressource de réseau et un opérateur, déterminer l'opérateur correspondant au terminal mobile.

6. Procédé selon l'une quelconque des revendications 1 à 5, comprenant en outre l'étape suivante :
définir la relation de mappage entre l'identité d'abonné et l'opérateur.

7. Appareil de partage de réseau radio, comprenant :
un module d'obtention (41), configuré pour obtenir une identité d'abonné acheminée par un terminal mobile ;
un module de détermination (42), configuré pour, conformément à l'identité d'abonné obtenue par le module d'obtention et à une relation de mappage prédéfinie entre l'identité d'abonné et un opérateur, déterminer un opérateur correspondant au terminal mobile ; et
un module de routage (43), configuré pour router une signalisation de service du terminal mobile vers un réseau d'infrastructure de l'opérateur qui correspond au terminal mobile et est déterminé par le module de détermination ; **caractérisé en ce que** :
le module de détermination (42, 52) comprend :
une unité de détermination de catégorie (525), configurée pour déterminer, conformément à l'identité d'abonné, une catégorie d'abonné itinérant, où la catégorie indique une relation de proportion entre des réseaux d'infrastructure partagés de différents opérateurs vers lesquels cette catégorie d'abonné est routée ; et
une unité de détermination d'opérateur (526), configurée pour déterminer, conformément à une relation de mappage entre une identité d'abonné de cette catégorie d'abonné et un opérateur, un opérateur correspondant à l'abonné itinérant.

8. Appareil selon la revendication 7, dans lequel :
le module d'obtention (41, 51) comprend : une première unité d'obtention (511) où, la première unité d'obtention (511) est configurée pour obtenir une identité internationale d'abonné mobile acheminée par un terminal mobile en envoyant un message de demande d'identité au terminal mobile, où l'identité internationale d'abonné mobile est utilisée comme l'identité d'abonné ; et
le module de détermination (42, 52) comprend : une première unité d'extraction (521) et une première unité de détermination (522) ; où,
la première unité d'extraction (521) est configurée pour extraire un indicatif de pays du mobile et un code de réseau mobile depuis une identité internationale d'abonné mobile ; et
la première unité de détermination (522) est configurée pour déterminer, conformément à l'indicatif de pays du mobile et au code de réseau mobile, et à une relation de mappage prédéfinie entre l'indicatif de pays du mobile et le code de réseau mobile et un opérateur, l'opérateur correspondant au terminal mobile.

9. Appareil selon la revendication 7, dans lequel :
le module d'obtention (41,51) comprend : une seconde unité d'obtention (512) ; où, la seconde unité d'obtention (512) est configurée pour obtenir, à partir d'une signalisation de service envoyée par un terminal mobile, une identité d'abonné mobile temporaire allouée au terminal mobile, où l'identité d'abonné mobile temporaire est utilisée comme l'identité d'abonné ; et
le module de détermination (42, 52) comprend : une seconde unité d'extraction (523) et une seconde unité de détermination (524) ; où,
la seconde unité d'extraction (523) est configurée pour extraire un identificateur de ressource de réseau à partir de l'identité d'abonné mobile temporaire ; et
la seconde unité de détermination (524) est configurée pour déterminer, conformément à l'identificateur de ressource de réseau et à une relation de mappage prédéfinie entre l'identificateur de ressource de réseau et un opérateur, l'opérateur correspondant au terminal mobile.

10. Appareil selon l'une quelconque des revendications 7 à 9, comprenant en outre :
un module de définition (54), configuré pour définir la relation de mappage entre l'identité d'abonné et l'opérateur.

11. Appareil selon l'une quelconque des revendications 7 à 10, dans lequel l'appareil est un sous-système de station de base.
